# NEUE EUROPÄISCHE PATENTSCHRIFT

(11) **EP 1 986 874 B2**
(45) Veröffentlichungstag und Bekanntmachung des Hinweises auf die Entscheidung über den Einspruch: **09.12.2015**
(45) Hinweis auf die Patenterteilung: 30.06.2010
(21) Anmeldenummer: 07702747.2
(22) Anmeldetag: 13.01.2007
(51) Int. Cl.: B60G 17/052

(54) **VENTILEINRICHTUNG ZUR MANUELLEN VERÄNDERUNG DER NIVEAULAGE EINES LUFTGEFEDERTEN FAHRZEUGES**
VALVE DEVICE FOR MANUALLY VARYING THE LEVEL OF AN AIR-SPRUNG VEHICLE
DISPOSITIF A SOUPAPE POUR LA MODIFICATION MANUELLE DU NIVEAU D'UN VEHICULE DOTE D'UNE SUSPENSION PNEUMATIQUE

(30) Priorität: 13.02.2006 DE 102006006439
(43) Veröffentlichungstag der Anmeldung: 05.11.2008
(73) Patentinhaber: WABCO GmbH, 30453 Hannover (DE)
(72) Erfinder: FRANK, Dieter, 30171 Hannover (DE); SIEKER, Armin, 33611 Bielefeld (DE); STENDER, Axel, 31787 Hameln (DE)
(86) Internationale Anmeldenummer: PCT/EP2007/000275
(87) Internationale Veröffentlichungsnummer: WO 2007/093251

(56) Entgegenhaltungen:
- EP-A- 1 712 380
- EP-A1- 0 188 706
- EP-A2- 0 398 008
- EP-B1- 0 536 124
- WO-A1-91/07291
- WO-A1-92/12021
- WO-A2-91/06640
- DE-A1- 2 510 954
- DE-A1- 2 623 235
- DE-A1- 4 202 729
- DE-C1- 4 120 824
- DE-C1- 10 129 143
- DE-C1- 19 510 792
- DE-C1- 19 913 380
- FR-A1- 2 733 942

## Beschreibung

Die Erfindung betrifft eine Ventileinrichtung zur manuellen Veränderung der Niveaulage eines luftgefederten Fahrzeuges gemäß dem Oberbegriff des Patentanspruchs 1.

Eine gattungemäße Ventileinrichtung ist aus dem Hause der Anmelderin als sogenanntes Drehschieberventil bekannt. Das bekannte Drehschieberventil dient der Steuerung des Anhebens und Absenkens von luftgefederten Fahrzeugen, z. B. Wechselpritschen- und Sattelanhänger-Fahrgestellen. Hierzu weist das Drehschieberventil ein als Hebel ausgebildetes manuelles Bedienelement auf, welches aus einer Mittelstellung durch Rechtsdrehung in eine erste Stellung und sodann durch weitere Rechtsdrehung in eine zweite Stellung gebracht werden kann, sowie entsprechend durch Linksdrehung in eine dritte und eine vierte Stellung gebracht werden kann. Die Mittelstellung dient dabei als Fahrt-Stellung, in der das Drehschieberventil das Luftfederventil der Luftfederungsanlage mit den Luftfederbälgen pneumatisch verbindet. Die beiden aus der Mittelstellung zunächst erreichbaren Stellungen (erste bzw. dritte Stellung) sind als Stopp-Stellung ausgebildet, in der die Luftfederbälge pneumatisch abgesperrt sind, so dass der jeweilige Luftdruck gehalten wird. Bei einem Weiterdrehen des Bedienelements über die jeweilige Stopp-Stellung hinaus (zweite bzw. vierte Stellung) wird, je nach Drehrichtung, entweder eine Heben-Stellung oder eine Senken-Stellung erreicht. In der Heben-Stellung werden die Luftfederbälge aus einem Vorratsbehälter mit Druckluft befüllt, so dass sich der Fahrzeugaufbau hebt, während in der Senken-Stellung die Luftfederbälge entlüftet werden und somit der Fahrzeugaufbau abgesenkt wird.

Das bekannte Drehschieberventil weist in einer Version eine mechanische Arretiervorrichtung auf, über die der Hebel in vorbestimmten, jeweils manuell einzustellenden Stellungen einrastbar ist, d. h. es sind fünf Raststellungen vorgesehen, in denen der Hebel durch die Arretiervorrichtung fixiert wird. Der Hebel kann dann aus der jeweiligen Raststellung manuell mit etwas erhöhtem Kraftaufwand in jede andere Stellung gebracht werden. Die zuvor beschriebene Ausführungsform ist jedoch nicht in allen Fällen bzw. bei jedem Fahrzeug einsetzbar, da beispielsweise aufgrund der Unfallverhütungsvorschriften der Metall-Berufsgenossenschaft für Fahrzeuge, die eine Hubhöhe von mehr als 300 mm aufweisen, eine automatische Rückstellung des Hebels von der Heben- oder Senken-Stellung in die jeweilige Stopp-Stellung gefördert wird (sogenannte "Totmannfunktion"). Daher gibt es eine weitere Version des bekannten Drehschieberventils mit der Totmannfunktion.

Bei dem bekannten Drehschieberventil kann es vorkommen, dass der Bediener den Hebel in der Stopp-Stellung belässt und mit dem Fahrzeug losfährt, ohne den Hebel in die Fahrt-Stellung gebracht zu haben. In diesem Fall wäre während der Fahrt die automatische Niveauregelungsfunktion außer Kraft gesetzt, was unerwünscht ist. Um dem letztgenannten Problem, nämlich dem unbeabsichtigten Belassen des Hebels in der Stopp-Stellung, zu begegnen, wird z. B. gemäß der gattungsbildenden DE 42 02 729 C2 oder DE 10129143 C1 eine Ventileinrichtung vorgeschlagen, bei der der Bedienhebel bei fahrendem Fahrzeug durch eine automatische Druckbeaufschlagung eines Steuerkolbens in die Fahrt-Stellung gebracht wird.

Die aus der DE 42 02 729 C2 bekannte Ventileinrichtung eignet sich aufgrund ihrer Konstruktion jedoch nicht für die eingangs erwähnte Ausführungsform ohne die Totmannfunktion, d.h. diese Ventileinrichtung ist nur mit der Totmannfunktion erhältlich. Hierdurch kann mit dieser Ventileinrichtung dem Wunsch vieler Anwender nach einer komfortableren Bedienung der Heben-/Senken-Funktion bei Fahrzeugen, die keine Totmannfunktion erfordern, nicht nachgekommen werden.

Der Erfindung liegt daher die Aufgabe zugrunde, eine Ventileinrichtung zur manuellen Veränderung der Niveaulage eines luftgefederten Fahrzeuges anzugeben, welche sowohl mit als auch ohne Totmannfunktion ausgebildet werden kann, ohne dass dafür eine wesentliche Änderung der Konstruktion notwendig ist, und dabei eine automatische Rückstellung in die Fahrt-Stellung erlaubt.
Diese Aufgabe wird durch die in dem Patentanspruch 1 angegebene Ereindung gelöst. Weiterbildungen und vorteilhafte Ausgestaltungen der Erfindung sind in den Unteransprüchen angegeben.

Die Erfindung hat den Vorteil, mit geringem Bauteilebedarf und daher kostengünstig eine mit und ohne Totmannfunktion ausbildbare Ventileinrichtung anzugeben, bei der zudem eine automatische Rückstellung in die Fahrt-Stellung ermöglicht wird. Dies wird auf verblüffend einfache Art dadurch erreicht, dass eine Entriegelungsvorrichtung vorgesehen ist, welche bei Anlegen eines elektrischen und/oder pneumatischen Signals die Rastwirkung einer von Drehschieberventilen her bekannten mechanischen Arretiervorrichtung aufhebt. Mit anderen Worten, die Rückstellfunktion für die Rückstellung der Ventileinrichtung in die Fahrt-Stellung wirkt unmittelbar auf die Arretiervorrichtung ein. Auf diese weise kann der relativ aufwändige Aufbau der Ventileinrichtung gemäß DE 42 02 729 C2 vermieden werden, welche z. B. einen relativ großvolumigen Rückstellkolben für die Rückstellung in die Fahrt-Stellung erfordert, da dort nicht eine Rastwirkung aufgehoben wird, sondern durch Druckluftbeaufschlagung überwunden wird, was einen relativ hohen Einsatz an Energie erfordert. Die erfindungsgemäße Ventileinrichtung kann demgegenüber wesentlich platzsparender und kostengünstiger aufgebaut werden und hat einen geringeren Energiebedarf zur Rückstellung in die Fahrt-Stellung.

Ein weiterer Vorteil der Erfindung ist, dass die Handhabung der unterschiedlichen Versionen, d.h. der Ventileinrichtung mit und ohne Totmannfunktion, vereinfacht und damit auch kostengünstiger gestaltet werden kann. Dies kann bei der erfindungsgemäßen Ventileinrichtung durch die jeweilige Ausbildung einer für die Rastwirkung der Arretiervorrichtung vorgesehenen vorgegebenen Kontur erreicht werden. So ist für die Version der Ventileinrichtung mit Totmannfunktion eine erste Kontur und für die Ausbildung ohne Totmannfunktion eine zweite Kontur erforderlich. Dies erfordert wiederum lediglich eine unterschiedliche Ausbildung des Bedienelements bzw., in einer noch kostengünstigeren Variante, die unterschiedliche Ausbildung einer die Kontur aufweisenden, mit dem Bedienelement drehfest verbundenen Hülse, welche die Kontur aufweist. Die übrigen Teile der Ventileinrichtung unterscheiden sich zwischen den genannten Versionen nicht, was den Vorteil hat, dass ansonsten identische Bauteile verwendet werden können.

Gemäß einer vorteilhaften Weiterbildung der Erfindung weist die Kontur Bereiche auf, die schräg gegenüber der Drehrichtung des Bedienelements angeordnet sind. Hierdurch kann der Bewegungsablauf für den Bediener der Ventileinrichtung vereinfacht und ergonomischer gestaltet werden. Während bei der Ventileinrichtung gemäß DE 42 02 729 C2 der Bediener mit relativ großem Kraftaufwand das Bedienelement durch Hineindrücken von der Fahrt-Stellung in die Stopp-Stellung bewegen muss, um sodann durch eine Drehbewegung ein Heben oder Senken des Fahrzeugaufbaus zu bewirken, wäre es für den Bediener wesentlich angenehmer, im wesentlichen nur eine Drehbewegung machen zu müssen. Durch die zuvor erläuterte Ausbildung der Kontur wird durch die schrägen Bereiche eine automatische Umsetzung der Drehbewegung in eine geringfügige Axialbewegung des Bedienelementes umgesetzt, so dass der Bediener lediglich eine Drehbewegung ausführen muss, um einige oder sämtliche Stellungen der Ventileinrichtung einzustellen.

Gemäß einer vorteilhaften Weiterbildung der Erfindung sind wenigstens eine Arretiernut in dem Bedienelement und wenigstens eine Arretieraussparung in dem Gehäuse vorgesehen, die in wenigstens einer Stellung des Bedienelements fluchten und dabei zur Aufnahme eines manuellen Arretierelements geeignet sind. Hierdurch ist durch einfaches manuelles Einstecken des Arretierelements in die Ventileinrichtung eine Arretierung des Bedienelements in vorbestimmten Stellungen, z.B. den Stopp-Stellungen, möglich.

Gemäß einer vorteilhaften Weiterbildung der Erfindung bewirkt das manuelle Arretierelement eine von der Entriegelungsvorrichtung unabhängige Arretierung des Bedienelements gegenüber dem Gehäuse. Diese Art der Arretierung ist somit im Vergleich zum zuvor erläuterten Einrasten des Bedienelements permanenter und sicherer, da sie nicht durch Bewegen des Bedienelements oder durch eine automatische Entriegelung durch die Entriegelungsvorrichtung überwindbar ist, sondern nur durch manuelles Entfernen des Arretierelements.

Diese zusätzliche Art der Arretierung des Bedienelements ist in besonderen Einsatzfällen von mit der erfindungsgemäßen Ventileinrichtung ausgestatteten Fahrzeugen vorteilhaft, z.B. im Container-Betrieb auf einem abgeschlossenen Container-Gelände, d.h. auf einem nicht öffentlichen Gelände, oder für das Durchfahren längerer, relativ niedriger Tunnel, die eine permanente Absenkung der Niveaulage des Fahrzeugs erfordern. Sobald der besondere Einsatzfall nicht mehr vorliegt, also z.B. nach erfolgreichem Durchfahren des Tunnels, ist das manuelle Arretierelement von dem Fahrzeugbediener wieder zu entfernen, um die sichere Rückstellung in die normale Niveaulage des Fahrzeugs zu gewährleisten.

Unter Nennung weiterer Vorteile wird die Erfindung nachfolgend anhand eines Ausführungsbeispiels unter Verwendung von Zeichnungen näher erläutert.

Es zeigen:
- Fig. 1 bis 3: eine erste, zweite und dritte Ausführungs- form der erfindungsgemäßen Ventileinrich- tung in Schnittdarstellung und
- Fig. 4: eine Detaildarstellung der Wirkungsweise des manuellen Arretierelements und
- Fig. 5: ein Bedienelement der Ventileinrichtung und
- Fig. 6 bis 12: verschiedene Konturen wobei die Figuren 7 und 12 nicht erfindungsgemäß sind.

In den Zeichnungen werden für einander entsprechende Bauteile gleiche Bezugszeichen verwendet.

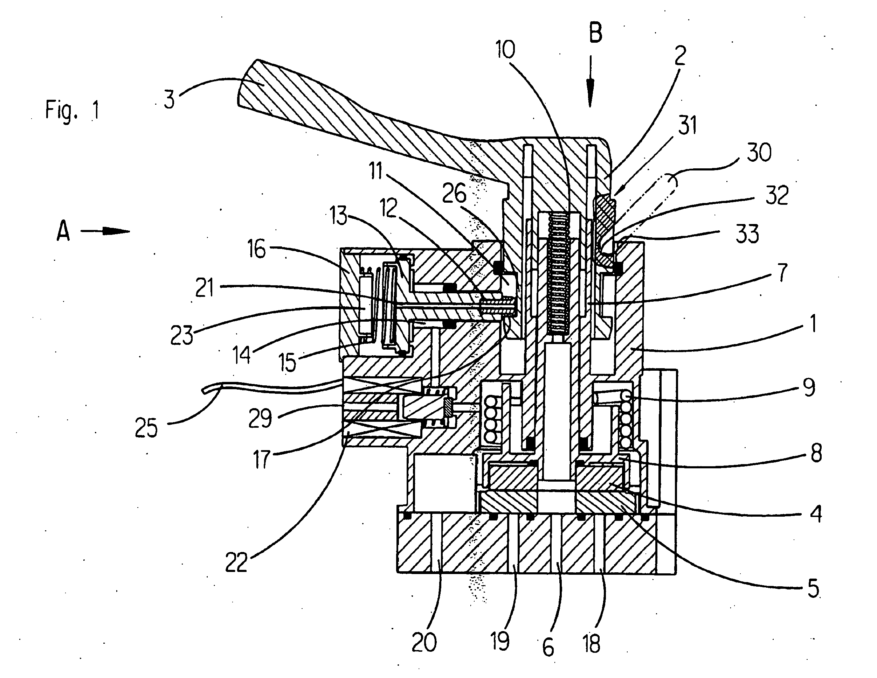

In der Fig. 1 ist eine erste Ausführungsform der erfindungsgemäßen Ventileinrichtung dargestellt, die ein Gehäuse (1) und ein Bedienelement (2) zeigt. Das Bedienelement (2) weist einen Hebel (3) auf. Das Bedienelement (2) ist durch Betätigung des Hebels (3) gegenüber dem Gehäuse (1) in einer Drehbewegung bewegbar. Hierzu ist das Bedienelement (2) in dem Gehäuse (1) sowie in einem rohrförmigen Teil (7) drehbar gelagert. Das rohrförmige Teil (7) ist mit dem Gehäuse (1) verbunden oder einstückig damit ausgebildet. Bei Betätigung des Bedienelements (2) bewegt dieses einen Mitnehmer (8) mit. Der Mitnehmer (8) dient zur Übertragung der Drehbewegung auf ein Schieberventil, welches aus zwei Keramikscheiben (4, 5) gebildet wird, die infolge der Drehbewegung gegeneinander verdrehbar sind. Die Keramikscheiben (4, 5) sind mit einer Reihe von Bohrungen und Kanälen versehen, welche die Ventilfunktionen der Ventileinrichtung darstellen. In einer Stellung der Ventileinrichtung wird ein freier Durchgang zwischen einem pneumatischen Anschluss (18), an den die Luftfederbälge anzuschließen sind, und einem pneumatischen Anschluss (19), an den ein Niveauregelventil anzuschließen ist, geschaltet (Fahrt-Stellung). In anderen Stellungen verbindet die Ventileinrichtung die Luftfederbälge mit einem Entlüftungsanschluss (6) der Ventileinrichtung (Senken-Stellung) oder mit einem Druckluftvorratsanschluss (20) (Heben-Stellung). In zwei weiteren Stellungen sperrt die Ventileinrichtung die Luftfederbälge ab (Stopp-Stellungen).

Der Mitnehmer (8) ist über eine Drehfeder (9) mit dem Gehäuse (1) verbunden. Die Drehfeder (9) übt eine Rückstellkraft auf den Mitnehmer (8) und darüber auch auf das Bedienelement (2) in Richtung der Mittelstellung, d. h. der Fahrt-Stellung, aus.

Des weiteren ist eine Druckfeder (10) vorgesehen, welche eine Druckkraft zwischen dem Mitnehmer (8) und dem Bedienelement (2) ausübt. Die Kraft der Druckfeder (10) kann von dem Bediener der Ventileinrichtung mittels Kraftausübung in axialer Richtung auf das Bedienelement (2) überwunden werden.

An dem Bedienelement (2) ist als Teil einer Arretiervorrichtung ein Kulissenteil (26) vorgesehen, welches mit einer in der Fig. 1 als Aussparung dargestellten nutenförmigen Kontur (11) versehen ist, welche im Folgenden noch näher beschrieben wird. Das Kulissenteil (26) kann als separates Bauteil, welches mit dem Bedienelement (2) drehfest verbunden wird, oder einstückig mit dem Bedienelement (2) ausgeführt sein. Als weiteres Teil der Arretiervorrichtung ist ein Stift (12) vorgesehen, der in die Kontur (11) eingreift. Der Stift (12) ist von seinem Durchmesser unter Berücksichtigung von Toleranzen an die Ausdehnung der Kontur (11) in axialer Richtung des Bedienelements (2) angepasst. Zur Verringerung der Reibung kann in einer vorteilhaften Weiterbildung der Erfindung an dem in die Kontur (11) eingreifenden Ende des Stifts (12) eine frei drehbare Rolle (17) angeordnet sein, welche bei einer Drehbewegung des Bedienelements (2) in der Kontur (11) abrollen kann. Die Rolle (17) kann beispielsweise aus Messing hergestellt werden.

Als Teil einer Entriegelungsvorrichtung ist eine Kolbeneinrichtung (13) vorgesehen, mit der der Stift (12) in der Darstellung gemäß Fig. 1 fest verbunden ist. Er kann jedoch auch einstückig mit der Kolbeneinrichtung (13) ausgeführt sein. Die Kolbeneinrichtung (13) wird durch eine in einem Federraum (23) vorgesehene Arretierfeder (15), welche sich an einer mit dem Gehäuse (1) verbundenen Platte (16) abstützt, gegen das Bedienelement (2) bzw. gegen die Kontur (11) gedrückt. Die Kolbeneinrichtung (13) bildet mit dem sie umgebenden Gehäusebereich sowie entsprechenden Dichtringen einen Druckraum (14).

Durch Druckbeaufschlagung des Druckraums (14) ist die Kolbeneinrichtung (13) und damit der Stift (12) entgegen der Kraft der Arretierfeder (15) von der Kontur (11) fort bewegbar, derart, dass der Stift (12) in diesem Zustand nicht mehr in die Kontur (11) eingreift und das Bedienelement (2) der Rückstellkraft der Drehfeder (9) folgt und aus der jeweils vorliegenden Stellung zurück in die Fahrt-Stellung bewegt wird. Auf diese Weise wird die Rastwirkung der Arretiervorrichtung aufgehoben.

Für die Druckbeaufschlagung des Druckraums (14) kann als weiteres Teil der Entriegelungsvorrichtung beispielsweise ein Magnetventil (22) vorgesehen sein, d. h. ein elektromagnetisch betätigbares Ventil, welches bei Bedarf über elektrische Leitungen (25) mit einem elektrischen Signal beaufschlagt wird. Das Magnetventil (22) kann beispielsweise als 3/2-Wegeventil ausgebildet sein, welches den Druckraum (14) in der einen Ventilstellung mit dem am Druckluftvorratsanschluss (20) anliegenden Vorratsdruck verbindet und in der anderen Ventilstellung über eine Auslassöffnung (29) entlüftet.

Zum Druckausgleich in dem Federraum (23) weist die Kolbeneinrichtung (13) einen Längskanal (21) auf, welcher sich entlang des Stifts (12) fort erstreckt und den Federraum (23) mit dem druckentlasteten Innenraum des Gehäuses (1) verbindet. Der druckentlastete Innenraum des Gehäuses (1) steht druckmittelseitig mit dem Entlüftungsanschluss (6) in Verbindung, so dass auf diese Weise ein sicherer Druckausgleich in dem Federraum (23) gewährleistet werden kann, ohne dass dieser mit einem eigenen Entlüftungsanschluss versehen werden muss. Ein eigener Entlüftungsanschluss brächte das Risiko von Dichtungsproblemen mit sich.

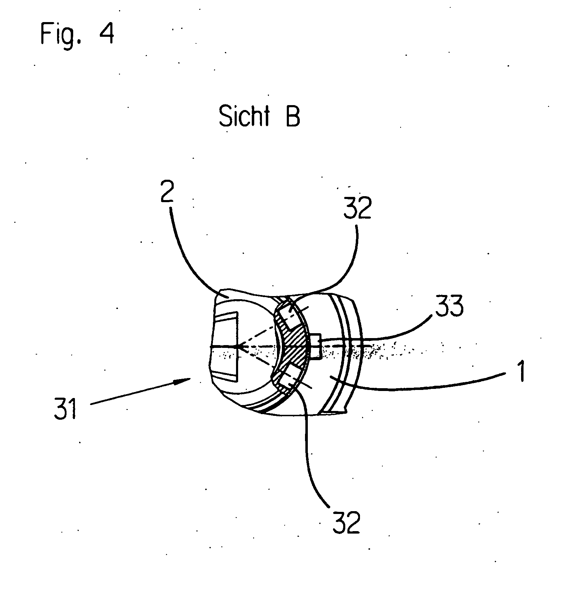

Die Ventileinrichtung gemäß Fig. 1 weist außerdem zwei Arretiernuten (32) in dem Bedienelement (2) sowie eine Arretieraussparung (33) in dem Gehäuse (1) auf, die in der Fig. 1 in dem Ausschnitt (31) dargestellt sind. Besser erkennbar ist die Anordnung der Arretiernuten (32) und der Arretieraussparung (33) in der Fig. 4, die den Ausschnitt (31) in der Betrachtungsrichtung gemäß Sicht B darstellt. Wie erkennbar ist, kann durch Drehung des Bedienelements jeweils eine der Arretiernuten (32) in Flucht mit der Arretieraussparung (33) gebracht werden, z.B. in den beiden Stopp-Stellungen. In diesen Stellungen bildet sich somit ein zur Aufnahme eines manuellen Arretierelements (30) geeigneter Bereich. Vorteilhaft sind die Innenkontur des sich ergebenden Bereichs, d.h. der Arretiernut (32) und der Arretieraussparung (33), an die Außenkontur des Arretierelements (30) angepasst, wodurch sich eine sichere Haltbarkeit des Arretierelements (30) ergibt. Das manuelle Arretierelement bewirkt eine von der Entriegelungsvorrichtung unabhängige Arretierung des Bedienelements gegenüber dem Gehäuse, d.h. auch bei Aufhebung der Rastwirkung der Arretiervorrichtung durch die Entriegelungsvorrichtung infolge des Anlegens eines elektrischen und/ oder pneumatischen Signals bleibt die Arretierung durch das manuelle Arretierelement (30) erhalten. Dies kann vorteilhaft beispielsweise im Containerbetrieb oder beim Durchfahren niedriger Tunnel genutzt werden.

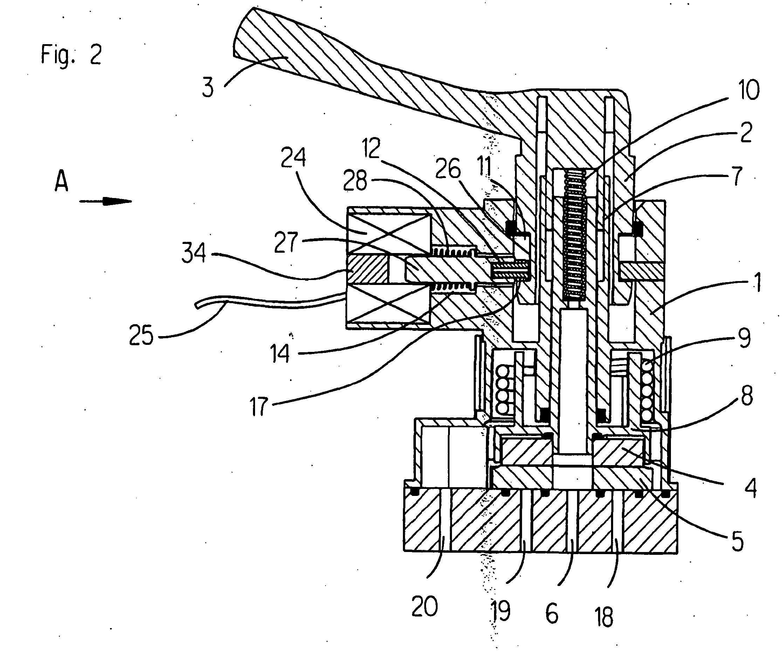

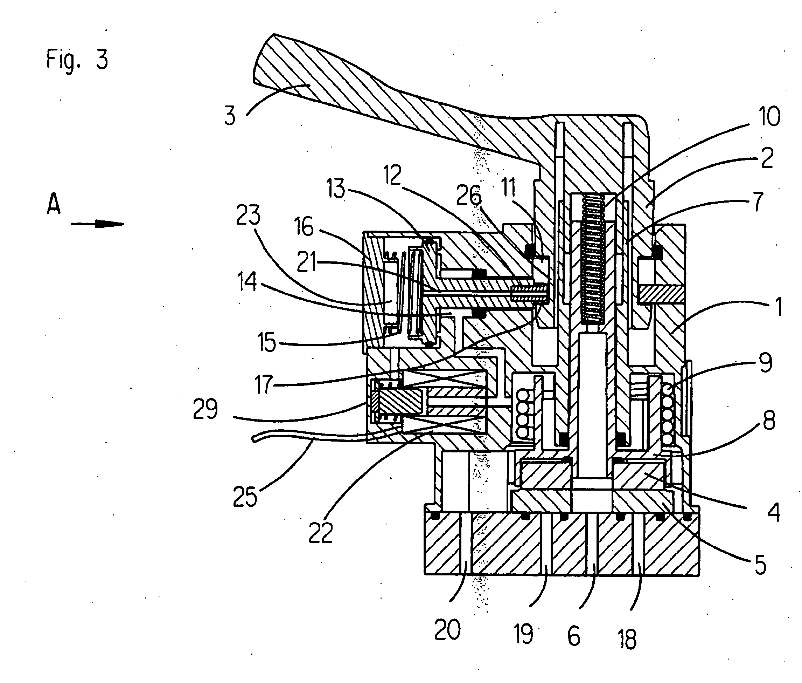

Die nachfolgend anhand der Fig. 2 und 3 erläuterten Ausführungsformen der erfindungsgemäßen Ventileinrichtung können vorteilhaft ebenfalls mit den erwähnten Arretiernuten (32) und der Arretieraussparung (33) zur Aufnahme des manuellen Arretierelements (30) versehen sein.

Die in der Fig. 2 dargestellte Ventileinrichtung weist statt der über das Magnetventil (22) druckmittelbeaufschlagbaren Kolbeneinrichtung (13) eine in die Ventileinrichtung integrierte Elektromagneteinrichtung (24, 27, 28, 34) auf, welche direkt ein Betätigen der dortigen Kolbeneinrichtung (27) entgegen der Kraft einer Einrückfeder (28) bewirkt. In diesem Fall dient die Kolbeneinrichtung (27) gleichzeitig als Anker der Elektromagneteinrichtung (24, 27, 28, 34), der durch die Einspeisung eines elektrischen Signals in die Spule (24) entgegen der Kraft der Einrückfeder (28) in Richtung eines Kerns (34) der Elektromagneteinrichtung (24, 27, 28, 34) angezogen wird. Hierdurch wird der Stift (12) ebenfalls von der Kontur (11) fort bewegt, derart, der dass der Stift (12) in diesem Zustand nicht mehr in die Kontur (11) eingreift und das Bedienelement (2) der Rückstellkraft der Drehfeder (9) folgt und aus der jeweils vorliegenden Stellung zurück in die Fahrt-Stellung bewegt wird. Auf diese Weise wird die Rastwirkung der Arretiervorrichtung aufgehoben. Im übrigen entspricht die in der Fig. 2 dargestellte Ventileinrichtung der anhand der Fig. 1 bereits erläuterten Ventileinrichtung.

Die weitere Ausführungsform der erfindungsgemäßen Ventileinrichtung gemäß der Fig. 3 entspricht der Ausführungsform gemäß Fig. 1, mit dem Unterschied, dass die als Entriegelungsvorrichtung wirkende Kolbeneinrichtung (13) bei in Eingriff befindlicher Arretiervorrichtung an beiden Kolbenseiten mit dem Vorratsdruck beaufschlagt ist und eine Entriegelung, d.h. eine Aufhebung der Rastwirkung, durch Druckentlüftung des Federraums (23) über das Magnetventil (22) bzw. die Auslassöffnung (29) erfolgt. Mit anderen Worten, bei entsprechender Betätigung des Magnetventils (22) verbindet dieses die Auslassöffnung (29) mit dem Federraum (23), was eine Bewegung der Kolbeneinrichtung (13) infolge des im Druckraum (14) weiterhin anstehenden Vorratsdrucks entgegen der Kraft der Arretierfeder (15) hervorruft. Hierdurch wird der Stift (12) von der Kontur (11) fort bewegt, derart, dass der Stift (12) in diesem Zustand nicht mehr in die Kontur (11) eingreift und das Bedienelement (2) der Rückstellkraft der Drehfeder (9) folgt und aus der jeweils vorliegenden Stellung zurück in die Fahrt-Stellung bewegt wird.

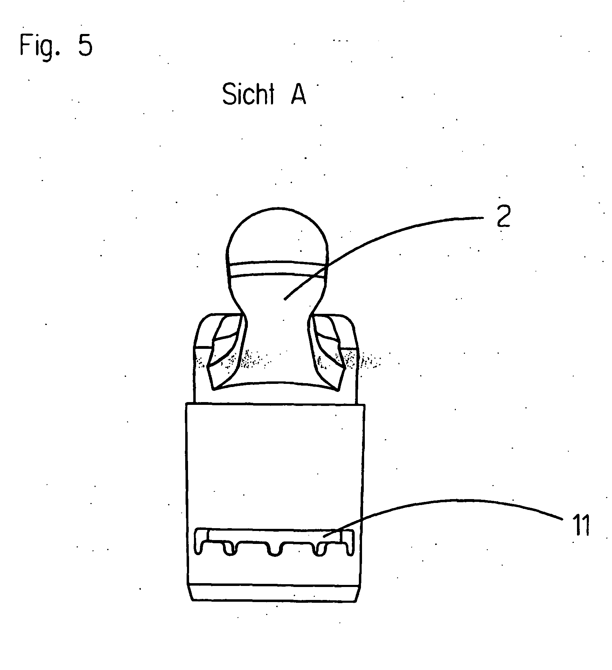

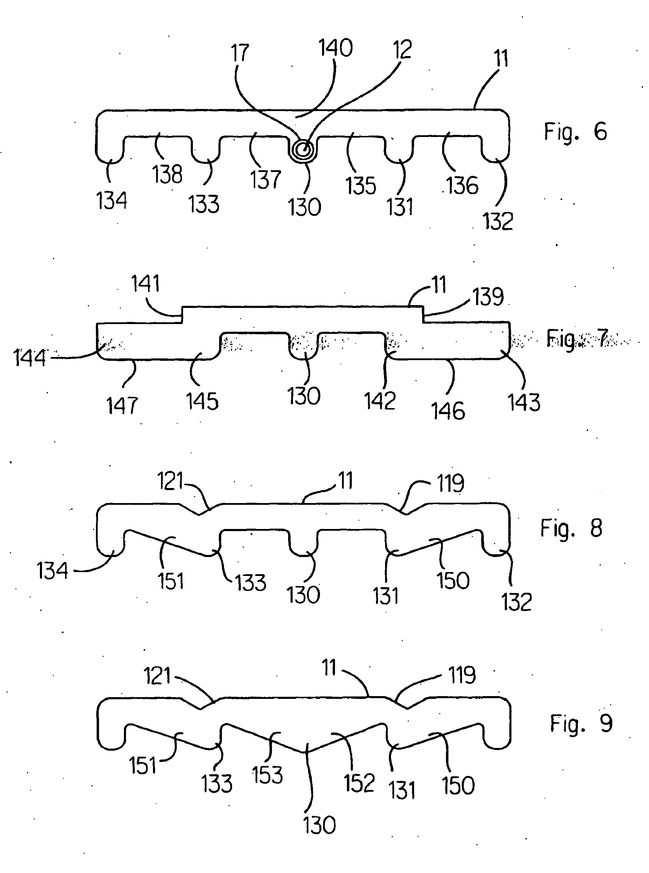

In der Fig. 5 ist eine Draufsicht (Sicht A gemäß Fig. 1) auf das Bedienelement (2) ohne das Gehäuse (1) dargestellt. Im unteren Bereich des schaftförmigen Teils des Bedienelements (2) ist die Kontur (11) zu erkennen, die nachfolgend anhand verschiedener Ausführungsformen, die in den Fig. 6 bis 12 dargestellt sind, erläutert werden. Zur besseren Erkennbarkeit ist die Kontur (11) in den Fig. 6 bis 12 in die Ebene transformiert dargestellt, d. h. es wurde der Einfluss der Krümmung des Bedienelements (2) in der Transformation nicht berücksichtigt.

In der Fig. 6 ist eine erste Ausführungsform der Kontur (11) für eine Ventileinrichtung ohne Totmannfunktion dargestellt. Die Kontur weist eine Ausbuchtung (130) auf, in der der Stift (12) in Folge der Kraft der Druckfeder (10) in der Fahrt-Stellung einrastet. Durch Drücken des Bedienelements (2) entgegen der Kraft der aus Ergonomiegründen vorzugsweise schwach ausgelegten Druckfeder (10) wird die Kontur (11) derart verschoben, dass der Stift (12) sich in einem kanalartigen Bereich (140) der Kontur (11) befindet, in welchem das Bedienelement (2) frei verdrehbar ist, d. h. die Arretiervorrichtung behindert diese Drehbewegung nicht. Der Bedienhebel kann sodann beispielsweise in die Heben-Stellung gedreht werden, in der beim Loslassen des Bedienhebels der Stift (12) in Folge der Kraft der Druckfeder (10) in eine Ausbuchtung (132) einrastet. Auf die gleiche Weise kann der Bedienhebel in eine der Stopp-Stellungen gebracht werden, mit denen die Ausbuchtungen (131) bzw. (133) korrespondieren, oder in die Senken-Stellung, mit der die Ausbuchtung (134) korrespondiert.

Zwischen den Ausbuchtungen (130, 131, 132, 133, 134) weist der Kanal (140) einen geraden Verlauf (135, 136, 137, 138) auf. Zusätzlich kann der Kanal (140) gemäß Fig. 6 mit einer in der Fig. 7 dargestellten Schulter (139, 141) versehen sein, welche im Bereich der jeweiligen Stopp-Stellung für ein Anschlagen des Stifts (12) bei der Drehbewegung des Bedienelements (2) sorgt und hierdurch dem Bediener das Auffinden der jeweiligen Stopp-Stellung erleichtert.

Gemäß Fig. 7 ist eine Kontur dargestellt, welche sich für eine Ausführungsform der Ventileinrichtung mit Totmannfunktion eignet. Zu diesem Zweck sind zwischen den jeweiligen für den Stift (12) vorgesehenen Positionen Heben/Stopp (144, 145) und Senken/Stopp (142, 143) jeweils Wandungen (146, 147) der Kontur auf gleichem Niveau vorgesehen, d. h. es sind keine Ausbuchtungen, wie in Fig. 6 dargestellt, vorgesehen. Dies hat zur Folge, dass ein beispielsweise manuell in der Heben-Stellung gehaltenes Bedienelement (2), bei dem der Stift (12) sich in der Position (144) befindet, sich aufgrund der Rückstellkraft der Drehfeder (9) selbsttätig in die Stopp-Stellung zurückbewegt, sobald das Bedienelement (2) losgelassen wird, d. h. der Stift (12) bewegt sich von der Position (144) in die Position (145) zurück. Das Gleiche gilt für die Senken-Stellung sowie die ihr zugeordnete Stopp-Stellung (Positionen 142 und 143 des Stifts (12)). Lediglich zum Zurückstellen in die Fahrt-Stellung ist eine Überwindung der jeweiligen Ausbuchtung (142, 145) durch manuelle axiale Kraftausübung auf das Bedienelement (2) erforderlich, so dass der Stift in der Fahrt-Stellung wieder in der Ausbuchtung (130) einrastet.

In der Fig. 8 ist eine Ausführungsform der Kontur (11) für eine Ventileinrichtung ohne Totmannfunktion dargestellt. Diese unterscheidet sich von der Ausführungsform gemäß Fig. 6 durch die gegenüber der Drehrichtung des Bedienelements (2) bzw. der Bewegungsrichtung des Stifts (12) schräg angeordneten Bereiche (150, 151). Diese Ausführungsform hat gegenüber der Fig. 6 den Vorteil, dass zum Bewegen des Bedienelements (2) aus der Stopp-Stellung (Positionen 131, 133) in die Senken-Stellung (Position 132) bzw. die Heben-Stellung (Position 134) keine Axialbewegung des Bedienelements (2) bewirkt werden muss, d. h. es muss nicht vom Bediener gedrückt werden, sondern in Folge der Abschrägung in den Bereichen (150, 151) wird automatisch die erforderliche Axialbewegung als Folge der Drehbewegung des Bedienelements (2) bewirkt. Ein manuelles Bewirken der Axialbewegung, d. h. ein Drücken auf das Bedienelement (2), ist in der Ausführungsform gemäß Fig. 8 nur noch beim Wechsel von der Fahrt-Stellung in eine der Stopp-Stellungen und umgekehrt erforderlich, sowie beim Zurückstellen von der Heben- bzw. Senken-Stellung in eine der Stopp-Stellungen. Hierdurch werden der Bedienkomfort sowie die Ergonomie der Bedienbewegung verbessert.

Des weiteren sind in der Fig. 8 an der Oberseite der Kontur (11) Nocken (119, 121) dargestellt. Die Nocken (119, 121) sind im Bereich der beiden Stopp-Stellungen angeordnet und bewirken eine verbesserte haptische Erkennbarkeit der Stopp-Stellungen für den Bediener. Der Bediener merkt dann an einem gewissen Widerstand bei der Drehbewegung des Bedienelements (2), dass sich dieses im Bereich einer der beiden Stopp-Stellungen befindet. Die Verwendung der Nocken (119, 121) ist auch für die übrigen dargestellten Konturen gemäß den Fig. 6 bis 12 vorteilhaft.

In der Ausführungsform gemäß Fig. 9 sind weitere abgeschrägte Bereiche (152, 153) vorgesehen, durch die die Erhöhung des Bedienkomforts auch auf das Bewegen des Bedienelements (2) aus der Fahrt-Stellung in eine der Stopp-Stellungen erweitert wird. Beim Bewegen aus der Fahrt-Stellung in eine der Stopp-Stellungen wird durch die Abschrägungen (152, 153) ebenfalls die erforderliche Axialbewegung automatisch als Folge der Drehbewegung des Bedienelements (2) bewirkt.

Ein manuelles Bewirken der Axialbewegung durch Drücken des Bedienelements (2) ist dann nur noch bei einer manuellen Rückstellbewegung von der Heben-Stellung in die Stopp-Stellung, von der Senken-Stellung in die Stopp-Stellung oder von der jeweiligen Stopp-Stellung in die Fahrt-Stellung erforderlich.

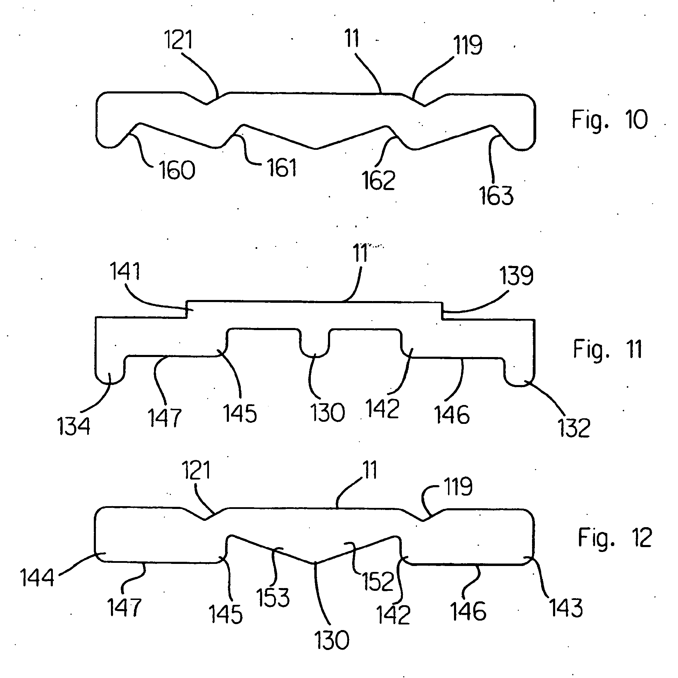

In der Ausführungsform gemäß Fig. 10 sind weitere abgeschrägte Bereiche (160, 161, 162, 163) vorgesehen, welche auch für die Rückstellbewegungen das Erfordernis der zuvor genannten manuellen Axialbewegung vermeiden, indem auch die bei der Rückstellung des Bedienelements (2) in Richtung der Fahrt-Stellung zu überwindenden Kanten (160, 161, 162, 163) abgeschrägt ausgebildet sind. Daher ist gemäß Fig. 10 ein manuelles Bewirken der Axialbewegung auch bei einer manuellen Rückstellbewegung von der Heben-Stellung in die Stopp-Stellung, von der Senken-Stellung in die Stopp-Stellung oder von der jeweiligen Stopp-Stellung in die Fahrt-Stellung nicht mehr erforderlich, was zu einer weiteren Erhöhung des Bedienkomforts führt.

Gemäß einer vorteilhaften Ausgestaltung der Erfindung sind dabei die Winkel der Abschrägungen für die Rückstellbewegung größer ausgebildet als die Winkel der Abschrägungen für die Bewegung des Bedienelements aus der Fahrt-Stellung in die übrigen Stellungen. Dies hat den Vorteil, dass die jeweiligen Winkelverhältnisse auf die jeweiligen Bedürfnisse des Bedieners, die Kraft der Druckfeder (10), die Reibverhältnisse zwischen dem Stift (12) und der Kontur (11) sowie die Rückstellkraft der Drehfeder (9) abstimmbar sind.

In der Ausführungsform gemäß Fig. 11 ist die anhand der Fig. 7 bereits erläuterte Kontur (11) dargestellt, jedoch hier ohne die Totmannfunktion. Hierfür sind die Ausbuchtungen (132, 134) gegenüber den Wandungen (146, 147) vertieft ausgebildet.

In der Ausführungsform gemäß Fig. 12 ist die anhand der Fig. 9 bereits erläuterte Kontur (11) dargestellt, jedoch hier mit der Totmannfunktion. Hierfür sind wiederum zwischen den jeweiligen für den Stift (12) vorgesehenen Positionen Heben/Stopp (144, 145) und Senken/Stopp (142, 143) jeweils Wandungen (146, 147) der Kontur auf gleichem Niveau vorgesehen, d. h. es sind keine Ausbuchtungen vorgesehen.

## Patentansprüche

1. Ventileinrichtung zur manuellen Veränderung der Niveaulage eines luftgefederten Fahrzeuges, mit einem Gehäuse (1) sowie einem gegenüber dem Gehäuse (1) durch Betätigung eines Hebels (3) bewegbaren Bedienelement (2), bei der das Bedienelement (2) mittels einer Drehbewegung in eine Senken-Stellung, eine Heben-Stellung, eine von zwei Stopp-Stellungen und eine Fahrt-Stellung stellbar ist, **dadurch gekennzeichnet, dass** das Bedienelement (2) zur Verhinderung einer Drehbewegung in der Senken-Stellung, der Heben-Stellung, den Stopp-Stellungen und der Fahrt-Stellung mittels einer mechanischen Arretiervorrichtung (12, 26), die zwischen dem Bedienelement (2) und dem Gehäuse (1) wirkt, einrastbar ist, und bei der eine Entriegelungsvorrichtung (13, 22; 24, 27, 28, 34) vorgesehen ist, welche bei Anlegen eines elektrischen und/oder pneumatischen Signals die Rastwirkung der Arretiervorrichtung (12, 26) aufhebt, wodurch eine Rückstellung des Bedienelements (2) in die Fahrt-Stellung ermöglicht wird.

2. Ventileinrichtung nach wenigstens einem der vorhergehenden Ansprüche, **dadurch gekennzeichnet, dass** die Arretiervorrichtung (12, 26) ein mit einer vorgegebenen Kontur (11) versehenes Kulissenteil (26) und einen in die Kontur (11) eingreifenden Stift (12) aufweist.

3. Ventileinrichtung nach Anspruch 2, **dadurch gekennzeichnet, dass** das Kulissenteil (26) drehfest mit dem Bedienelement (2) verbunden ist.

4. Ventileinrichtung nach Anspruch 3, **dadurch gekennzeichnet, dass** das Kulissenteil (26) einstückig mit dem Bedienelement (2) ausgeführt ist.

5. Ventileinrichtung nach wenigstens einem der Ansprüche 2 bis 4, **dadurch gekennzeichnet, dass** der Stift (12) in dem Gehäuse (1) angeordnet ist.

6. Ventileinrichtung nach wenigstens einem der Ansprüche 2 bis 5, **dadurch gekennzeichnet, dass** die Entriegelungsvorrichtung (13, 22; 24, 27, 28, 34) eine druckluftbetätigbare Kolbeneinrichtung (13) aufweist, mit der der Stift (12) verbunden oder einstückig ausgeführt ist.

7. Ventileinrichtung nach Anspruch 6, **dadurch gekennzeichnet, dass** die Entriegelungsvorrichtung (13, 22; 24, 27, 28, 34) ein Magnetventil (22) aufweist, über das die Druckluftbetätigung der Kolbeneinrichtung (13) steuerbar ist.

8. Ventileinrichtung nach wenigstens einem der Ansprüche 2 bis 5, **dadurch gekennzeichnet, dass** die Entriegelungsvorrichtung (13, 22; 24, 27, 28, 34) eine Elektromagneteinrichtung (24, 27, 28, 34) aufweist, mit der der Stift (12) verbunden oder einstückig ausgeführt ist.

9. Ventileinrichtung nach wenigstens einem der Ansprüche 2 bis 8, **dadurch gekennzeichnet, dass** der Stift (12) mit seinem in die Kontur (11) eingreifenden Ende mit einer Rolle (17) versehen ist.

10. Ventileinrichtung nach wenigstens einem der vorhergehenden Ansprüche, **dadurch gekennzeichnet, dass** die Kontur (11) Bereiche (150; 151; 152; 153; 160; 161; 162; 163) aufweist, die schräg gegenüber der Drehrichtung des Bedienelements (2) angeordnet sind.

11. Ventileinrichtung nach wenigstens einem der vorhergehenden Ansprüche, **dadurch gekennzeichnet, dass** wenigstens eine Arretiernut (32) in dem Bedienelement (2) und wenigstens eine Arretieraussparung (33) in dem Gehäuse (1) vorgesehen sind, die in wenigstens einer Stellung des Bedienelements (2) fluchten und dabei zur Aufnahme eines manuellen Arretierelements (30) geeignet sind.

12. Ventileinrichtung nach Anspruch 11, **dadurch gekennzeichnet, dass** das manuelle Arretierelement (30) eine von der Entriegelungsvorrichtung (13, 22; 24, 27, 28, 34) unabhängige Arretierung des Bedienelements (2) gegenüber dem Gehäuse (1) bewirkt.

13. Ventileinrichtung nach wenigstens einem der vorhergehenden Ansprüche, **dadurch gekennzeichnet, dass** die Ventileinrichtung als Drehschieberventil ausgebildet ist.

14. Ventileinrichtung nach wenigstens einem der vorhergehenden Ansprüche, **dadurch gekennzeichnet, dass** die Rückstellkraft zur Überführung des Bedienelements (2) in die Fahrt-Stellung durch eine Drehfeder (9) ausgeübt wird.

## Claims

1. Valve device for manually varying the level of an air-sprung vehicle, having a housing (1) and having an operating element (2) which is movable relative to the housing (1) by means of the actuation of a lever (3), in which valve device the operating element (2) can be adjusted by means of a rotational movement into a lowering position, a raising position, one of two stop positions and a driving position, **characterized in that** the operating element (2) can be latched, to prevent a rotational movement, in the lowering position, the raising position, the stop positions and the driving position by means of a mechanical arresting device (12, 26) which acts between the operating element (2) and the housing (1), and in which valve device an unlocking device (13, 22; 24, 27, 28, 34) is provided which, when an electrical and/or pneumatic signal is applied, eliminates the latching action of the arresting device (12, 26), as a result of which a return of the operating element (2) into the driving position is enabled.

2. Valve device according to at least one of the preceding claims, **characterized in that** the arresting device (12, 26) has a guide slot part (26), which is provided with a predefined contour (11), and a pin (12) which engages into the contour (11).

3. Valve device according to Claim 2, **characterized in that** the guide slot part (26) is rotationally fixedly connected to the operating element (2).

4. Valve device according to Claim 3, **characterized in that** the guide slot part (26) is formed in one piece with the operating element (2).

5. Valve device according to at least one of Claims 2 to 4, **characterized in that** the pin (12) is arranged in the housing (1).

6. Valve device according to at least one of Claims 2 to 5, **characterized in that** the unlocking device (13, 22; 24, 27, 28, 34) has a piston device (13) which can be actuated by compressed air and to which the pin (12) is connected or with which the pin (12) is formed in one piece.

7. Valve device according to Claim 6, **characterized in that** the unlocking device (13, 22; 24, 27, 28, 34) has a solenoid valve (22) by means of which the compressed air actuation of the piston device (13) can be controlled.

8. Valve device according to at least one of Claims 2 to 5, **characterized in that** the unlocking device (13, 22; 24, 27, 28, 34) has an electromagnet device (24, 27, 28, 34) to which the pin (12) is connected or with which the pin (12) is formed in one piece.

9. Valve device according to at least one of Claims 2 to 8, **characterized in that** the pin (12) is provided, with its end which engages into the contour (11), with a roller (17).

10. Valve device according to at least one of the preceding claims, **characterized in that** the contour (11) has regions (150; 151; 152; 153; 160; 161; 162; 163) which are arranged obliquely with respect to the rotational direction of the operating element (2).

11. Valve device according to at least one of the preceding claims, **characterized in that** at least one arresting groove (32) is provided in the operating element (2) and at least one arresting cutout (33) is provided in the housing (1), which arresting groove (32) and arresting cutout (33) are aligned, and thereby suitable for receiving a manual arresting element (30), in at least one position of the operating element (2).

12. Valve device according to Claim 11, **characterized in that** the manual arresting element (30) serves to arrest the operating element (2) with respect to the housing (1) independently of the unlocking device (13, 22; 24, 27, 28, 34).

13. Valve device according to at least one of the preceding claims, **characterized in that** the valve device is designed as a rotary slide valve.

14. Valve device according to at least one of the preceding claims, **characterized in that** the returning force for moving the operating element (2) into the driving position is imparted by a torsion spring (9).

## Revendications

1. Dispositif à soupape pour modifier manuellement la position du niveau d'un véhicule à suspension pneumatique, comprenant un boîtier (1) ainsi qu'un élément de commande (2) déplaçable par rapport au boîtier (1) par actionnement d'un levier (3), l'élément de commande (2) pouvant être commandé au moyen d'un mouvement de rotation dans une position d'abaissement, une position de soulèvement, une de deux positions d'arrêt et une position de conduite, **caractérisé en ce que** l'élément de commande (2) pour empêcher un mouvement de rotation dans la position d'abaissement, la position de soulèvement, les positions d'arrêt et la position de conduite peut être encliqueté au moyen d'un dispositif de blocage mécanique (12, 26), qui agit entre l'élément de commande (2) et le boîtier (1), et dans lequel un dispositif de déverrouillage (13, 22 ; 24, 27, 28, 34) est prévu, lequel, en cas d'application d'un signal électrique et/ou pneumatique, supprime l'effet d'encliquetage du dispositif de blocage (12, 26), de sorte qu'un retour de l'élément de commande (2) dans la position de conduite est permis.

2. Dispositif à soupape selon au moins l'une quelconque des revendications précédentes, **caractérisé en ce que** le dispositif de blocage (12, 26) présente une partie de coulisse (26) pourvue d'un contour prédéfini (11) et une goupille (12) s'engageant dans le contour (11).

3. Dispositifs à soupape selon la revendication 2, **caractérisé en ce que** la partie de coulisse (26) est connectée de manière solidaire en rotation à l'élément de commande (2).

4. Dispositif à soupape selon la revendication 3, **caractérisé en ce que** la partie de coulisse (26) est réalisée d'une seule pièce avec l'élément de commande (2).

5. Dispositif à soupape selon au moins l'une quelconque des revendications 2 à 4, **caractérisé en ce que** la goupille (12) est disposée dans le boîtier (1).

6. Dispositif à soupape selon au moins l'une quelconque des revendications 2 à 5, **caractérisé en ce que** le dispositif de déverrouillage (13, 22 ; 24, 27, 28, 34) présente un dispositif de piston (13) pouvant être actionné par de l'air sous pression, auquel la goupille (12) est connectée ou avec lequel elle est réalisée d'une seule pièce.

7. Dispositif à soupape selon la revendication 6, **caractérisé en ce que** le dispositif de déverrouillage (13, 22 ; 24, 27, 28, 34) présente une électrovanne (22), par le biais de laquelle l'actionnement par air sous pression du dispositif de piston (13) peut être commandé.

8. Dispositif à soupape selon au moins l'une quelconque des revendications 2 à 5, **caractérisé en ce que** le dispositif de déverrouillage (13, 22 ; 24, 27, 28, 34) présente un dispositif à électrovanne (24, 27, 28, 34) auquel la goupille (12) est connectée ou avec lequel elle est réalisée d'une seule pièce.

9. Dispositif à soupape selon au moins l'une quelconque des revendications 2 à 8, **caractérisé en ce que** la goupille (12) est pourvue à son extrémité s'engageant dans le contour (11) d'un rouleau (17).

10. Dispositif à soupape selon au moins l'une quelconque des revendications précédentes, **caractérisé en ce que** le contour (11) présente des régions (150 ; 151 ; 152 ; 153 ; 160 ; 161 ; 162 ; 163) qui sont disposées obliquement par rapport au sens de rotation de l'élément de commande (2).

11. Dispositif à soupape selon au moins l'une quelconque des revendications précédentes, **caractérisé en ce qu'**au moins une rainure de blocage (32) est prévue dans l'élément de commande (2) et au moins un évidement de blocage (33) est prévu dans le boîtier (1), lesquels sont en affleurement dans au moins une position de l'élément de commande (2) et sont ainsi appropriés pour recevoir un élément de blocage manuel (30).

12. Dispositif à soupape selon la revendication 11, **caractérisé en ce que** l'élément de blocage manuel (30) provoque un blocage de l'élément de commande (2) par rapport au boîtier (1) qui est indépendant du dispositif de déverrouillage (13, 22 ; 24, 27, 28, 34).

13. Dispositif à soupape selon au moins l'une quelconque des revendications précédentes, **caractérisé en ce que** le dispositif à soupape est réalisé sous forme de soupape à tiroir rotatif.

14. Dispositif à soupape selon au moins l'une quelconque des revendications précédentes, **caractérisé en ce que** la force de rappel pour transférer l'élément de commande (2) dans la position de conduite est exercée par un ressort de torsion (9).
